Europäisches Patentamt

European Patent Office

Office européen des brevets

(11) Veröffentlichungsnummer: **0 362 739**
**A2**

## EUROPÄISCHE PATENTANMELDUNG

(21) Anmeldenummer: 89118163.8

(22) Anmeldetag: 30.09.89

(51) Int. Cl.5: **B01D 36/02 , B01D 29/03 , B01D 29/27**

(30) Priorität: 04.10.88 DE 8812477 U

(43) Veröffentlichungstag der Anmeldung:
**11.04.90 Patentblatt 90/15**

(84) Benannte Vertragsstaaten:
**AT DE GB NL SE**

(71) Anmelder: **ELECTROLUX WÄSCHEREIMASCHINEN GMBH**
**Sindelfinger Strasse 10**
**D-7400 Tübingen(DE)**

(72) Erfinder: **Walterscheid, Franz Wilhelm**
**Schlossstrasse 10**
**D-7409 Dusslingen(DE)**

(74) Vertreter: **Witte, Alexander, Dr.-Ing. et al**
**Witte, Weller & Hilgenfeldt Patent- und**
**Rechtsanwälte Augustenstrasse 7**
**D-7000 Stuttgart 1(DE)**

(54) Filtervorrichtung.

(57) Eine Filtervorrichtung (10) zum Ausfiltern von Feststoffen aus Flüssigkeiten, insbesondere Ausfiltern von Flusen- und Feststoffenverunreinigungen aus Waschlaugen von Waschmaschinen weist einen Behälter (12) auf, der mit Einlaß- (14) und Auslaßmitteln (18) für die Flüssigkeit versehen ist, wobei zwischen Einlaß- (14) und Auslaßmittel (18) Filterelemente (24, 34) vorgesehen sind, durch die die gesamte von den Einlaßmitteln (14), der Flüssigkeit vom Austritt aus den Auslaßmitteln strömt. Um eine wirkungsvolle Filterwirkung zu erzielen wird vorgeschlagen, daß im Behälter (12) ein erstes, als Grobfilter ausgebildetes, aus dem Behälter (12) entnehmbares Filterelement (24) angeordnet ist, und daß in Strömungsrichtung anschließend an das erste Filterelement (24) zumindest ein zweites, als Feinfilter ausgebildetes Filterelement (34) angeordnet ist, das in einem bodenseitigen Abschnitt (42) geschlossen ist

Fig. 1

# Filtervorrichtung

Die Erfindung betrifft eine Filtervorrichtung zum Ausfiltern von Feststoffen aus Flüssigkeiten, insbesondere zum Ausfiltern von Flusen und Feststoffverunreinigungen aus Waschlaugen von Waschmaschinen, mit einem Behälter, der mit Einlaß- und Auslaßmittel für die Flüssigkeit versehen ist, wobei zwischen Einlaß- und Auslaßmittel Filterelemente vorgesehen sind, durch die die von den Einlaßmitteln kommende Flüssigkeit vor Austritt aus den Auslaßmitteln strömt.

Derartige Filtervorrichtungen sind allgemein bekannt. Die im Behälter aufgenommenen Filterelemente dienen dazu, um Feststoffe aus der durchströmenden Flüssigkeit abzutrennen. Die Filterelemente sind dabei mit Öffnungen versehen, durch die die Flüssigkeit hindurchtreten kann, die auszufilternden Feststoffe jedoch nicht hindurchtreten können, so daß diese am oder im Filterelement zurückgehalten werden. Die Größe der Öffnungen in Filterelementen ist somit eine Funktion der Größe der auszufilternden Feststoffe. Enthält eine Flüssigkeit Feststoffe verschiedener Größe, und enthält sie insbesondere Feststoffe mit sehr unterschiedlichen Größen, so ist es schwierig, die geeignete Größe der Öffnungen zu finden. Dies ist insbesondere auch dann schwierig, falls die verschieden großen Partikel in der Flüssigkeit in verschieden großen Mengen anfallen. Ferner bestehen Schwierigkeiten, falls die verschieden ausgebildeten Feststoffe in der Flüssigkeit verschiedene Dichten aufweisen.

Derartige Probleme treten beispielsweise beim Filtern von Waschlaugen auf, die Flusen und Feststoffverunreinigungen enthalten. Insbesondere problematisch sind Waschlaugen aus Waschmaschinen, in denen sogenannte Reinigungs-Mops gewaschen werden. Reinigungs-Mops werden insbesondere von Reinigungsunternehmen verwendet, die Gebäude, Industrieanlagen oder auch Krankenhäuser reinigen. Die Reinigungs-Mops bestehen dabei aus Scheuerbesen mit langen Fransen. Die Fransen sind schnur- oder streifenförmig und bestehen dabei entweder aus Woll-, Kunst- oder Vliesstoffen. Aufgrund der hohen Beweglichkeit der Fransen können mit solchen Wisch-Mops auf feuchtem Wege hervorragend Ecken und auch Böden unter Gegenständen, wie Betten oder Schreibtischen, gereinigt werden.

Solche Mops müssen sehr häufig, oftmals bereits nach einem Reinigungsvorgang gewaschen werden. Dies gilt insbesondere für Mops, die zum Reinigen von Krankenhäusern Verwendung finden. Solche Mops müssen aus hygienischen Gründen mit aggressiven Waschmitteln und bei hohen Temperaturen gewaschen werden, um sicherzustellen, daß keine Keime in den Fransen verbleiben. Unter diesen extremen Bedingungen lösen sich zahlreiche Flusen von den Fransen ab.

Werden solche Mops mit gebräuchlichen Haushaltswaschmaschinen gewaschen, so wird die Waschlauge, die sogenannte Flotte, mittels einer Pumpe unter Druck durch ein grobmaschiges Filter zum Ablaß der Maschine gepumpt. Aufgrund des Druckes und der großen Maschengröße treten die Flusen im wesentlichen ungehindert aus der Waschmaschine aus. Es wurde festgestellt, daß in Gebäuden, in denen Waschmaschinen zum Waschen von Mops in Betrieb sind, durch den hohen Anfall der abgewaschenen Flusen verstärkt Verstopfungen des Wasserabflußnetzes zu beobachten sind.

Beim Reinigen von Krankenhäusern wurde außerdem festgestellt, daß an den Fransen der Mops, insbesondere nach dem Reinigen von Behandlungs- oder Operationsräumen, Teile von Glasampullen und Glasspritzen hängen. Kappen von Glasampullen werden in solchen Behandlungsräumen oft aus Zeitnot bei eiligen Notmaßnahmen auf den Boden geworfen, wo sie dann in feine Glassplitter zertrümmert werden. Die in den Fransen der Mops hängenden Glassplitter sorgen dann beim Reinigungsvorgang, bei dem die Mops in der Trommel hin- und hergeschleudert werden, noch zusätzlich dafür, daß Flusen aus dem Stoff oder Vliesverbund herausgetrennt und abgelöst werden.

Neben den zuvor erwähnten Flusen enthält die Ablauge aus solchen Waschmaschinen auch noch feinste Feststoffpartikel wie Glassplitter Sand, Straßenschmutz od. dgl., und ferner noch sehr feine Schwebeteilchen, die aus Mikroflusen bestehen, welche als sogenannter Grauschlamm bezeichnet werden.

Aufgabe der vorliegenden Erfindung ist daher, eine Filtervorrichtung der eingangs genannten Art derart zu verbessern, daß damit Feststoffe verschiedener Größe und verschiedener Dichte, insbesondere Flusen und Feststoffverunreinigungen aus Waschlaugen, sicher, wirkungsvoll und einfach herausgefiltert werden können.

Erfindungsgemäß wird die Aufgabe dadurch gelöst, daß im Behälter ein erstes, als Grobfilter ausgebildetes, aus dem Behälter entnehmbares erstes Filterelement angeordnet ist, und daß in Strömungsrichtung anschließend an das erste Filterelement zumindest ein zweites, als Feinfilter ausgebildetes Filterelement angeordnet ist, das in einem bodenseitigen Abschnitt geschlossen ist.

Das erste, als Grobfilter ausgebildete Filterelement dient zum Abtrennen von großen Partikeln, wie beispielsweise Flusen in Waschlaugen. Das in Strömungsrichtung anschließende zweite Feinfilter dient zum Abtrennen von kleinen, vorzugsweise leichten, d.h. in der Flüssigkeit schwebenden oder mitgerissenen Teilen, wie kleine Flusen oder Schlammpartikel aus Waschlaugen. Der geschlossene bodenseitige Abschnitt des zumindest einen als Feinfilter ausgebildeten Filterelements dient dazu, schwergewichtige Partikel, wie beispielsweise Sand, Glassplitter oder dgl., die durch das erste Grobfilter hindurchgetreten sind und in dem Weg zwischen erstem und zweitem Filter jedoch auf den Boden des Behälters gesunken sind, zurückzuhalten. Das zweite Filter dient somit gleichzeitig zum Zurückhalten von leichten in der Flüssigkeit schwebenden Teilen, sowie zum Zurückhalten von kleinen, bereits auf den Boden des Behälters abgesunkenen Partikeln. Die vom bodenseitig geschlossenen Abschnitt aufgehaltenen Partikel wie Glassplitter von Ampullen, Metallteile von Ampullensägen oder sonstige Metallsplitter werden also auch gleichzeitig von den Flusen separiert und können getrennt entsorgt Werden. Die möglicherweise noch bakterienhaltigen Flusen können verbrannt werden, ohne daß dabei Schlacken aus Metall- und Glassplittern übrig bleiben. Dadurch, daß das als Grobfilter ausgebildete erste Filterelement herausnehmbar ist, kann dieses insbesondere bei der Verwendung zum Ausfiltern von stark flusenhaltigen Waschlaugen von Zeit zu Zeit herausgenommen, gereinigt oder durch andere ersetzt werden, ohne daß dabei auch die anderen Filterelemente gereinigt werden müssen. Das Verhältnis von Flusen zu Kleinteilen ist in solchen Laugen sehr groß, d.h. der Flusenanteil überwiegt stark. Es wird dadurch eine wirkungsvolle und auf Dauer einsatzbereite Filtervorrichtung geschaffen.

Somit wird die Aufgabe vollkommen gelöst.

In einer weiteren Ausgestaltung der Erfindung ist der Behälter als Wanne mit abnehmbarer Deckplatte ausgebildet, wobei die Einlaß- und die Auslaßmittel als an der Behälteraußenseite angeordnete Stutzen ausgebildet sind, über die der Behälter in eine Ablaufleitung einer Waschmaschine zwischenschaltbar ist.

Diese Maßnahme hat den Vorteil, daß die Filtervorrichtung besonders einfach handhabbar ist, d.h. an die Stutzen müssen lediglich Leitungen angebracht werden, um die zu filternde Flüssigkeit in den Behälter einzuführen bzw. aus diesem abzuleiten. Im Behälter selbst sind dann bei abgenommener Deckplatte die Filterelemente leicht zugänglich, d.h. sie können durch Abnehmen der Deckplatte inspiziert bzw. zu Reinigungszwecken herausgenommen werden. Die Vorrichtung kann an eine herkömmliche Waschmaschine angeschlossen werden.

In einer weiteren Ausgestaltung der Erfindung ist der Behälter als fahrbares Sockelteil ausgebildet, auf dessen Deckplatte eine Waschmaschine stellbar ist.

Diese Maßnahme hat den Vorteil, daß die Filtervorrichtung an eine geeignete Stelle neben eine bereits vorhandene Waschmaschine gefahren werden kann, wobei, falls die Waschmaschine in engen Räumlichkeiten aufgenommen ist, diese auch einfach auf den Behälter gestellt werden kann. Die Größe des Sockelteils kann so ausgebildet sein, daß eine Waschmaschine bündig auf das Sockelteil gestellt werden kann. Die Filtervorrichtung kann dann als Nachrüstteil für eine herkömmliche Haushaltswaschmaschine ausgebildet sein, die beispielsweise zum Waschen von Reinigungsmops herangezogen wird. In einem solchen Fall kann das in der Waschmaschine vorhandene Grobfilter einfach entfernt und die Flotte nach Verlassen der Waschmaschine durch die erfindungsgemäße Filtervorrichtung geführt werden. Diese Maßnahme hat auch den Vorteil, daß Problemlaugen, beispielsweise nach dem Reinigen von Operationsräumen, von darin festgehaltenen Feststoffen hygienisch befreit werden können, d.h. die als fahrbarer Sockel ausgebildete Filtervorrichtung kann, ohne daß daran Manipulationen von Hand vorgenommen werden müssen, einen Filtervorgang durchführen und anschließend beispielsweise zum Entkeimen in spezielle Räume gebracht oder anschließend mit speziellen Lösungen behandelt werden.

In einer weiteren Ausgestaltung der Erfindung ist der Behälter quaderförmig ausgebildet, wobei an dessen einer Stirnseite im Bereich deren Oberkante die Einlaßmittel angeordnet sind, wobei in Durchströmrichtung nach dem letzten Filterelement im Bereich einer Bodenkante des Behälters die Auslaßmittel vorgesehen sind.

Diese Maßnahme hat den Vorteil, daß das Durchströmen durch die Filtervorrichtung lediglich aufgrund der Schwerkraft erfolgt, d.h. daß keine zusätzlichen Pumpmittel in der Filtervorrichtung vorgesehen sein müssen. Dies ist insbesondere von Vorteil, falls die Filtervorrichtung in Zusammenhang mit einer Waschmaschine verwendet wird, aus der ja die Waschlauge mittels einer Pumpe unter Druck stehend abgeführt wird. Dieser Druck ist ausreichend, die Flotte auch durch die Erfindungsgemäße Filtervorrichtung durchzuführen. Dadurch wird eine besonders einfach und somit wirtschaftliche Filtervorrichtung geschaffen.

In einer weiteren Ausgestaltung der Erfindung ist das erste Filterelement als perforiertes Brett ausgebildet, das in Anströmungsrichtung gesehen, derart geneigt ist, daß dessen Oberkante weiter stromabwärts liegt als dessen Unterkante.

Diese Maßnahme hat den Vorteil, daß das erste Filterelement als geneigtes Prallblech ausgebildet ist, d.h. die ankommende Flüssigkeit wird stark verwirbelt und großflächig auf dem Filterelement verteilt, so daß dessen Oberfläche gesamtwirkend ist. Damit können aus der Flüssigkeit bereits durch ein einziges geneigtes Filterelement zuverlässig alle großen Teile, wie beispielsweise Flusen, ausgefiltert werden.

In Kombination mit dem an der Oberkante des Behälters angeordneten Einlaufstutzen ist wiederum eine besonders einfache Vorrichtung geschaffen, d.h. die vom Einlaßstutzen kommende Flüssigkeit prallt auf das geneigte Brett, strömt großflächig über dieses, wobei die ursprüngliche etwa horizontal gerichtete Einströmungsrichtung derart geändert wird, daß diese unmittelbar nach dem geneigten Brett im wesentlichen entlang der Schwerkraft, d.h. nach unten gerichtet ist, so daß kleine Feststoffpartikel, die relativ schwer sind, alsbald nach dem geneigten Brett auf den Boden absinken und nicht mehr von der nach dem geneigten Brett weiterströmenden Flüssigkeit mitgerissen werden.

In einer weiteren Ausgestaltung der Erfindung ist das erste Filterelement mit Öffnungen versehen, deren Größe von der Oberkante zur Unterkante hin abnimmt.

Diese Maßnahme hat den Vorteil, daß das erste Grobfilter in sich selbst gesehen ein abgestuftes Filter ist, so daß insbesondere mit der geneigten Anordnung, auch schon an diesem auf der Prallseite nach unten ablaufende, relativ kleine Teile, aufgehalten werden können.

In einer weiteren Ausgestaltung der Erfindung ist das erste Filterelement als mit Öffnungen versehener Sack ausgebildet.

Diese Maßnahme hat den Vorteil, daß der als Grobfilter wirkende Sack, nachdem er voll ist, aus der Filtervorrichtung entnommen und verworfen oder, beispielsweise durch Verbrennen, entsorgt werden kann. Dadurch ist es nicht mehr notwendig, das erste Filterelement, das ja bei stark flusenhaltigen Waschlaugen besonders rasch belegt wird, zu reinigen. Die Ausbildung als Sack bietet außerdem eine große Filterfläche auf einem relativ kleinen Raum.

In einer weiteren vorteilhaften Ausgestaltung weisen die Einlaßmittel einen Einlaßstutzen auf, der sich in einem Fortsatz in den Innenraum des Behälters hineinerstreckt, und der Sack ist im Bereich seiner Öffnung über den Fortsatz gestülpt.

Diese Maßnahme hat den Vorteil, daß eine einfache Anbringung des ersten Filterelements im Behälter möglich ist. Diese Maßnahme vereinfacht auch die Handhabung, da der Sack beim Auswechseln des ersten Filterelements lediglich über den Stutzen gestülpt Werden muß, beim Auswechseln dementsprechend lediglich vom Fortsatz des Stutzens abgezogen Werden muß.

In einer Weiteren vorteilhaften Ausgestaltung ist eine Haltevorrichtung vorgesehen, die den Sack im Behälter hält.

Diese Maßnahme hat den Vorteil, daß der Sack, falls er über einen seitlichen Einlaßstutzen gestülpt ist, nicht aufgrund der Schwerkraft abhängen kann, sondern gehalten ist. Dadurch kann auch sichergestellt werden, daß der Sack den Boden des Behälters nicht berührt, so daß sich im Bodenbereich vor dem geschlossenen Bereich des zweiten Filterelements, die durch den Sack hindurchgetretenen kleinen, jedoch schweren Partikel absetzen können.

In einer weiteren vorteilhaften Ausgestaltung der Erfindung ist die Haltevorrichtung einerseits auf dem um den Fortsatz liegenden Abschnitt des Sakkes fest anbringbar und wird andererseits vom zweiten Filterelement getragen.

Diese Maßnahme hat den Vorteil, daß eine besonders konstruktiv einfache Halterung vorgesehen sein kann, die bereits vorhandene Bauelemente, nämlich den Fortsatz des Einlaßstutzens und das zweite Filterelement als Abstützpunkte verwendet. Ferner kann die Haltevorrichtung, die um den um den Fortsatz des Stutzens anliegenden Bereich des Sackes fest anliegt als Klemme für den Sack wirken, so daß er durch den Druck der eingepumpten Flotte nicht vom Fortsatz des Einlaßstutzens herabgeschoben wird. Die Haltevorrichtung kann auch so ausgebildet sein, daß sie beim Auswechseln des Sackes samt diesem aus dem Behälter entnommen werden kann und anschließend der mit ausgefilterten Flusen gefüllte Sack von der Haltevorrichtung abgenommen wird. Anschließend wird ein neuer Sack außerhalb der Filtervorrichtung in die Haltevorrichtung eingesetzt und diese dann samt den Sack wieder in die Filtervorrichtung eingesetzt. Dadurch ist die Handhabung sehr erleichtert.

In einer weiteren Ausgestaltung der Erfindung ist das zweite Filterelement unmittelbar anschließend an das erste geneigte Filterelement und senkrecht stehend angeordnet.

Diese Maßnahme hat den Vorteil, daß beispielsweise zwischen dem geneigten ersten Filterelement und dem zweiten senkrecht stehenden Element ein dreieckförmiger Beruhigungsraum vorhanden ist, in dem eine starke, nach unten gerichtete Komponente der Strömung vorhanden ist. Dadurch können bereits in diesem Bereich die meisten schweren kleinen Partikel, wie Sand, Glassplitter od. dgl. auf den Boden absinken und werden von dem zweiten Filterelement bzw. dessen geschlossenem bodenseitigen Bereich zurückgehalten.

In einer weiteren Ausgestaltung der Erfindung ist das zumindest eine weitere bzw. zweite Filterelement oberhalb des geschlossenen bodenseitigen Abschnitts mit Öffnungen versehen, deren Größe zur Oberkante des zweiten Filterelements hin zunimmt.

Diese Maßnahme hat den Vorteil, daß auch das zweite Filterelement eine abgestufte Filterwirkung aufweist. Die Öffnungen über dem geschlossenen bodenseitigen Abschnitt sind dabei so klein, daß kleine abgesunkene oder gerade absinkende Glas- oder Sandpartikel nicht hindurchtreten können. Im Bereich der Oberkante sind im Flüssigkeitsstand durch das Absinken im zuvor erwähnten Beruhigungsraum wenig Partikel mehr vorhanden, so daß durch diese größeren Öffnungen Flüssigkeit hindurchtritt, die nicht mehr mit Festteilen behaftet ist. Dadurch bildet dieses zweite Filterelement keinen allzu großen Strömungswiderstand, d.h. die Flüssigkeit tritt, auch ohne daß sie unter Druck gesetzt wird, relativ rasch durch die Filtervorrichtung hindurch. Dadurch wird die Kapazität der Filtervorrichtung, d.h. der Durchsatz der zu filternden Flüssigkeit, erhöht. Andererseits bedeutet dies, daß beispielsweise bei einer Haushaltwaschmaschine, bei der ein gewisser Flüssigkeitsaustritt besteht, die Filtervorrichtung dann entsprechend klein ausgebildet werden kann.

In einer weiteren Ausgestaltung der Erfindung ist im Behälter in Durchströmrichtung nach dem letzten Filterelement eine Pumpe angeordnet, die die efilterte Flüssigkeit zu den Auslaßmitteln fördert.

Diese Maßnahme hat den Vorteil, daß falls die in die Filtereinrichtung einströmende Flüssigkeit nicht den genügenden Druck bzw. keine ausreichende Strömungsgeschwindigkeit aufweist, dies in der Filtervorrichtung selbst erzeugt wird.

In einer weiteren Ausgestaltung der Erfindung ist im Behälter ein Schwimmer angeordnet, der mit einer Überlaufsicherungsanzeige gekoppelt ist, wobei der Schwimmer bei Überschreiten eines bestimmten Flüssigkeitsstandes im Behälter eine Anzeige auslöst.

Diese Maßnahme hat den Vorteil, daß falls der Flüssigkeitsstand aufgrund zusetzender Filteröffnungen einen gewissen Stand erreicht hat, dies angezeigt wird, so daß die Filtervorrichtung inspiziert bzw. die Filter gereinigt werden können.

In einer weiteren Ausgestaltung der Erfindung ist der Schwimmer im Bereich zwischen geneigtem erstem Filterelement und dem nachfolgenden, senkrecht stehenden Filterelement angeordnet.

Diese Maßnahme hat den Vorteil, daß der Schwimmer in dem Bereich angeordnet ist, in dem der Flüssigkeitsspiegel aufgrund von Filterverstopfungen am ehesten ansteigen wird. Dadurch wird eine besonders empfindliche Anzeige von Zusetzen der Filterelemente erreicht.

In einer weiteren Ausgestaltung der Erfindung ist die Überlaufsicherungsanzeige an eine mit der Filtervorrichtung in flüssigkeitsleitender Verbindung stehenden Waschmaschine anbringbar.

Diese Maßnahme hat den Vorteil, daß diese optisch oder akustisch angezeigten Signale, gegebenenfalls gekoppelt mit anderen Signalen der Waschmaschine, von einer Bedienungsperson erkennbar sind. So kann beispielsweise vor Einschalten eines neuen Waschvorgangs angezeigt werden, daß die angekoppelte Filtervorrichtung inspiziert werden muß.

Es versteht sich, daß die vorstehend genannten und die nachstehend noch zu erläuternden Merkmale nicht nur in der jeweils angegebenen Kombination, sondern auch in anderen Kombinationen und in Alleinstellung einsetzbar sind, ohne den Rahmen der vorliegenden Erfindung zu verlassen.

Die Erfindung Wird nachfolgend anhand eines ausgewählten Ausführungsbeispiels im Zusammenhang mit der beiliegenden Zeichnung näher beschrieben und erläutert. Es zeigen:

Fig. 1 eine schematische perspektivische Darstellung eines ersten Ausführungsbeispiels einer erfindungsgemäßen Filtervorrichtung mit abgenommener Deckplatte und

Fig. 2 einen Längsschnitt eines zweiten Ausführungsbeispiels.

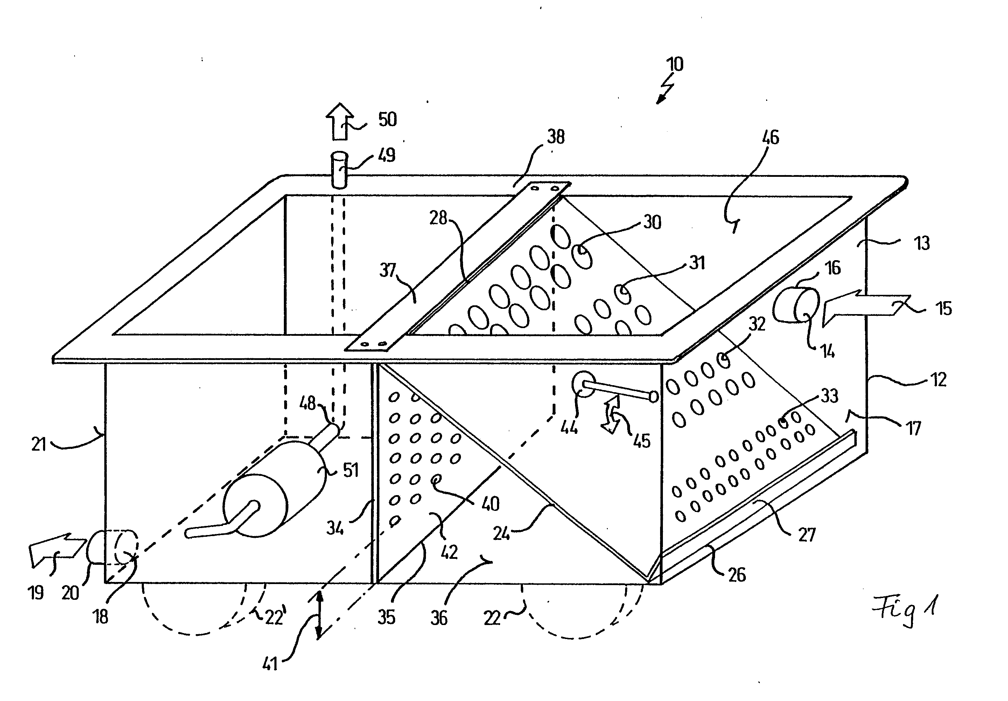

Die in Fig. 1 dargestellte Filtervorrichtung 10 weist einen Behälter 12 auf, der als quaderförmige Wanne 13 ausgebildet ist.

Die Wanne 13 ist mit einer hier nicht dargestellten Deckplatte flüssigkeitsdicht verschließbar.

Die Wanne ist an einer in der Darstellung rechten äußeren Stirnfläche bzw. Stirnseite 17 mit einem Einlaßmittel 14 in Form eines Rohrstutzens 16 versehen.

Der Rohstutzen 16 liegt dabei etwa im Bereich der Oberkante der Stirnseite 17.

Die Wanne 13 ist längs ihrer rechteckförmigen Oberkante mit einem umlaufenden Rand 38 versehen, der auch als Auflagefläche für die hier nicht dargestellte Deckplatte dient.

Die Wanne 13 ist im dargestellten Ausführungsbeispiel aus Edelstahl hergestellt, sie kann jedoch auch aus Kunststoffmaterial bestehen.

Auf der der Stirnfläche 17 gegenüberliegenden Seite der Wanne 13, d.h. auf der in der Darstellung linken Seite bzw. Seitenfläche 21 ist ein erstes Auslaßmittel 18 in Form eines Rohrstutzens 20 angeordnet. Der Rohrstutzen 20 ist dabei unmittelbar über der Bodenfläche 36 der Wanne 13 angeordnet.

Im dargestellten Ausführungsbeispiel sind die Rohrstutzen 16 bzw. 20 als einfache Rohrstutzen ausgebildet, die mit keinerlei Mitteln zum Verschließen, wie Absperrhähnen od. dgl. versehen sind. In weiteren, hier nicht dargestellten Ausführungsbeispielen, sind die Rohrstutzen mit Absperrhähnen versehen.

Der Durchmesser der Rohrstutzen 16 bzw. 20 ist dabei derart, daß auf die Stutzen Ableitungsschläuche von gebräuchlichen Waschmaschinen geschoben werden können. Die Durchmesser der Stutzen 16 bzw. 20 können jedoch auch größer ausgebildet sein, so daß dann geeignete Adapter zwischen die Rohrverbindungsstücke gelegt werden müssen.

Im Innenraum des Behälters 12 bzw. der Wanne 13 ist ein erstes Filterelement 24 angeordnet, das die Form eines rechteckigen perforierten Stahlblechs 25 einnimmt. Die Breite des Blechs 25 entspricht dabei der Breite des Innenraums der Wanne 13.

Das Blech 25 ist derart geneigt im Behälter 12 aufgenommen, daß dessen Unterkante 26, vom Rohrstutzen 16 aus gesehen, näher liegt als dessen Oberkante 28.

Im Bereich der Unterkante 26 ist das Blech 25 mit einer Abwinkelung 27 versehen, wobei das Blech 25 über die Unterkante 26 auf der Bodenfläche 36 der Wanne 13 aufliegt. Die Abwinkelung 27 dient dabei dazu, das Blech gegen die Innenseite der Stirnfläche 17 abzustützen und in Position zu halten.

Das Blech 25 ist mit Öffnungen 30, 31, 32 und 33 versehen, deren Durchmesser von der Oberkante 28 zur Unterkante 26 hin andauernd abnimmt.

Der Durchmesser der Öffnungen 30 beträgt beispielsweise 20 mm, der Durchmesser der Öffnungen 31 15 mm, der Durchmesser der Öffnungen 32 6 mm und der Durchmesser der Öffnungen 33 beispielsweise 4 mm.

Die Oberkante 28 des Blechs 25 liegt auf einer hier nicht erkennbaren Oberkante eines zweiten, senkrecht stehenden Filterelements 34 auf.

Das zweite Filterelement 34 ist ebenfalls als perforiertes Stahlblech ausgebildet, dessen Breite ebenfalls der lichten Breite der Wanne 13 entspricht. Das zweite Filterelement 34 ist an seiner Oberkante mit einer Querleiste 37 versehen, die beidseitig über das zweite Filterelement 34 hinausreicht und in entsprechende Aussparungen (hier nicht näher dargestellt) im Rand 38 aufgenommen ist. Die Querleiste 37 ist dabei über Zapfen fest mit dem Rand 38 verbunden, d.h. das zweite Filterelement 34 ist fest in der Wanne 13 aufgenommen. Durch Abziehen der Querleiste 37 samt dem daran hängenden zweiten Filterelement 34 von den Zapfen kann dieses jedoch unter Kraftaufwand auch von der Wanne 13 abgenommen werden.

Das erste Filterelement 24 liegt dabei lediglich locker auf dem zweiten Filterelement 34 auf und kann einfach von Hand bei abgenommener Deckplatte, wie in der Figur dargestellt, aus der Wanne 13 entnommen werden.

Das zweite Filterelement 34 ist mit Öffnungen 40 versehen, die durchweg denselben Durchmesser aufweisen, der etwa 2 mm beträgt. Die Öffnungen 40 reichen allerdings nicht bis an die Unterkante 35 des zweiten Filterelements, sondern enden in einem Abstand 41 über dieser Unterkante 35.

Demzufolge weist das zweite Filterelement 34 einen bodenseitig geschlossenen Abschnitt 42 auf.

An der Innenseite der Wanne 13 ist im Bereich zwischen erstem Filterelement 24 und zweitem Filterelement 34, in der Darstellung an der hinteren Seitenwand 46, ein Schwimmer 44 angeordnet, der drehbar an der Wand 46 gehalten ist, so daß er sich längs eines Pfeils 45 hin- und herbewegen kann. Der Schwimmer ist mit einer hier nicht näher dargestellten Überlaufsicherungsanzeige verbunden und löst diese Anzeige aus, falls der Flüssigkeitsspiegel in diesem Zwischenraum eine gewisse Höhe überschritten hat, wobei diese Höhe so eingestellt wird, daß sie etwa der Höhe des bodenseitigen Abschnitts 42 des zweiten Filterelements 34 entspricht.

Hinter dem zweiten Filterelement 34 ist in der Wanne 13 bodenseitig eine Pumpe 51 angeordnet, die über zweite Auslaßmittel 48 in der hinteren Seitenwand 46 der Wanne 13 mit einer Steigleitung 49 verbunden ist, welche durch eine Öffnung durch den Rand 38 hindurchreicht. Durch die Steigleitung 49 kann mittels der Pumpe 41 wie dies durch einen Pfeil 50 angedeutet ist, Flüssigkeit aus der Wanne 13 gepumpt werden.

Die in der Zeichnung dargestellte Filtervorrichtung 10 kann falls in dem Raum in dem die Wanne 13 aufgestellt ist ein bodenseitiger Abfluß vorhanden ist, über den Auslaßstutzen 20 entleert werden. Ist ein solcher bodenseitiger Ablauf im Raum nicht vorhanden, so kann mittels der Pumpe 51 die Flüssigkeit über die Steigleitung 49 beispielsweise zu einem Waschbecken od. dgl. gepumpt werden.

In weiteren, hier nicht dargestellten Ausführungsbeispielen sind diese Lösungen alternativ vorhanden, d.h. die Wanne 13 ist entweder mit einem Auslaß 20 oder mit einer Pumpe 51 versehen.

Die untere Bodenfläche der Wanne 13 ist ferner mit Rädern 22, 22' versehen, so daß die Wanne 30 hin und her verschoben werden kann.

Zum Einsatz, beispielsweise zum Filtern einer Flotte aus einer Waschmaschine, in der stark flusenabgebende Waschmops gewaschen wurden, wobei die Mops außerdem noch mit Sand, Schmutz und Glassplittern verunreinigt waren, wird der Stutzen 16 mit dem Auslaß der Waschmaschine verbunden.

Die Flotte kann dann durch den Stutzen 16, wie dies durch einen Pfeil 15 angedeutet ist, in die Wanne 13 eintreten. Die eintretende Flotte prallt auf das erste Filterelement 24, wird dort großflächig verteilt, und der größte Teil der Flusen wird durch die Öffnungen 30, 31, 32 und 33 zurückgehalten. Die Flüssigkeit, die dann noch im wesentlichen feine Flusen, Sand und Glaspartikel enthält, stromt mit einer stark nach unten, d.h. gegen die Bodenfläche 36 gerichteten Strömung, weiter in Richtung zweites Filterelement 34. In diesem Zwischenraum sinken schwerere Teile wie Sand, Glas od. dgl. auf den Boden der Wanne 13 ab und können aufgrund des geschlossenen Abschnitts 42 des zweiten Filterelements 34 dieses nicht passieren. Die noch in der Flüssigkeit schwebenden kleineren Festteile wie feine Flusen, werden dann durch die kleinen Öffnungen 40 des zweiten Filterelements zurückgehalten. Nach dem zweiten Filterelement 34 ist die Flotte bestens gefiltert und kann dann, je nach Ausgestaltung, über den Auslaßstutzen 20 bzw. die Pumpe 51 abgeführt werden. Steigt der Flüssigkeitsspiegel im Bereich vor dem zweiten Filterelement 34 soweit an, daß er bis an die ersten Öffnungen über dem geschlossenen Abschnitt 42 reicht, d.h. daß diese Öffnungen also verstopft sind, so spricht der Schwimmer 44 bzw. die damit gekoppelte Überlaufsicherungsanzeige an. Die Deckplatte kann dann abgenommen und die Filtervorrichtung, wie in der Figur dargestellt, von oben her inspiziert werden. Je nach Verschmutzungsgrad können dann die Filterelemente 24 bzw. 34 herausgenommen und gereinigt werden. Zu einer Generalreinigung kann auch die gesamte Wanne auf die Seite gekippt und ausgespritzt bzw. gereinigt werden.

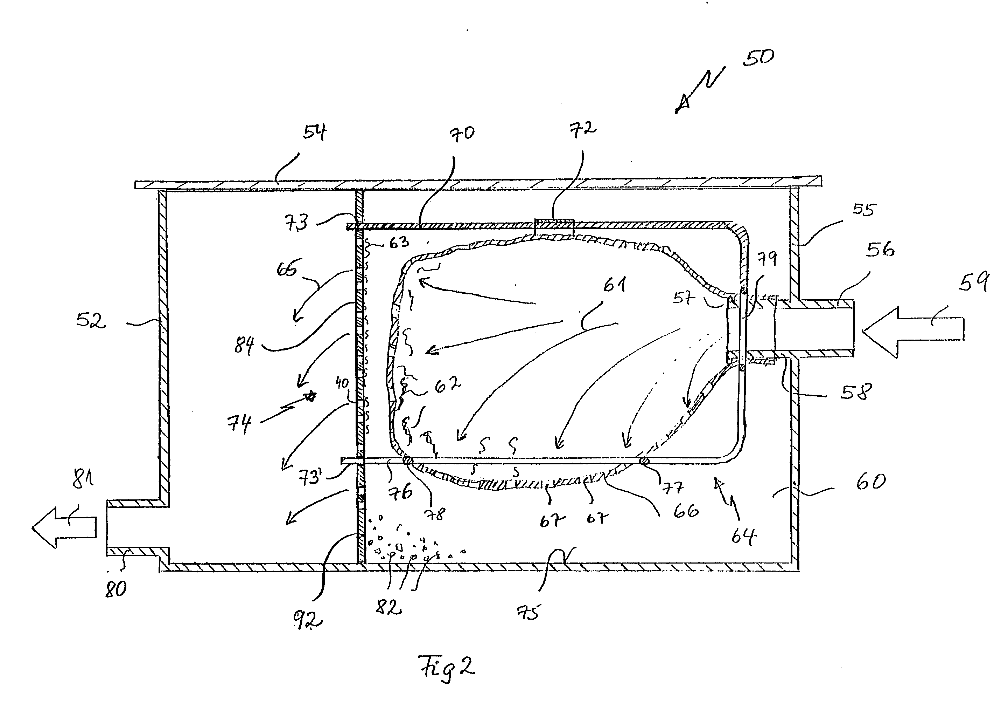

Ein in Fig. 2 dargestelltes weiteres Ausführungsbeispiel einer erfindungsgemäßen Filtervorrichtung 50 weist, ebenfalls wie in Zusammenhang mit Fig. 1 beschrieben, einen Behälter 52 auf, der als quaderförmige Wanne 53 ausgebildet ist, die mit einer Deckplatte 54 verschlossen ist.

Auf der in der Darstellung von Fig. 2 rechten Wand 55 der Wanne 53 ist ein Einlaßstutzen 56 vorgesehen, der sich im Innenraum 60 der Wanne 53 in einem Fortsatz 58 fort erstreckt, dessen äußeres inneres Ende mit einem Ringwulst 57 versehen ist.

Um den Fortsatz 58 ist ein Sack 66 im Bereich dessen Öffnungsseite gestülpt.

Der Sack weist mehrere Öffnungen 67 auf, die in der Zeichnung lediglich schematisch dargestellt sind.

Die Öffnungen 67 können beispielsweise Öffnungen eines gewobenen grobmaschigen Sackes sein. Die Öffnungen 67 können auch Poren eines aus einem andersartigen Material wie Kunstfaservlies oder dgl. bestehenden Sack sein. Es sind auch Sackmaterialien, die papierähnlich sind, vorgesehen, wobei diese mit bestimmten Perforationen versehen sind.

Die Öffnungen 67 im Sack 66 sind derart, daß sie grobe Flusen 62 einer durch den Einlaßstutzen 56 in den Innenraum des Sackes 66 strömenden Waschflotte zurückhalten, feine Flusen 63 oder kleine Partikel 82 wie Glassplitter, Ampullenspitzen, jedoch durchlassen.

Der Sack 66 wird von einer Haltevorrichtung 58 in der in Fig. 2 dargestellten Position gehalten.

Die Haltevorrichtung 68 weist einen oberen mittigen Haltestab 70 auf, der durch eine Lasche 72 an der Oberseite des Sackes 66 durchgefädelt ist, somit verhindert, daß der Sack 66 in Schwerkraftrichtung abhängt.

Auf der Unterseite wird der Sack 66 von zwei seitlich beabstandeten unteren Haltestäben 76 gehalten (in der Darstellung von Fig. 2 ist der hintere deckungsgleiche Haltestab nicht zu erkennen), die über Querstäbe 77, 78 verbunden sind, somit eine untere Auflage für den Sack 66 bilden, die gewährleistet, daß der Sack im Abstand über der Bodenfläche 75 der Wanne 53 gehalten wird.

Die in der Darstellung von Fig. 2 linken Enden der Haltestäbe 70, 76 sind durch Öffnungen 73, 73' im zweiten Filterelement 84 hindurchgeschoben, das, wie in Zusammenhang mit Fig. 1 beschrieben, als stehendes perforiertes Stahlblech ausgebildet ist. Das zweite Filterelement 84 dient somit als Stütze für die Haltevorrichtung 68.

Auf der rechten Seite münden die Haltestäbe 70, 76 in einer geschlitzten Ringklammer 79, die gleichzeitig dazu dient, den über den Fortsatz 58 gestülpten Teil des Sackes 66 dort festzuhalten.

Die Ringklammer 59 kann entweder auf den Fortsatz 58 aufgeklipst oder über den Ringwulst 57 aufgeschoben werden.

Die Haltevorrichtung 68 ist, in der Darstellung von Fig. 2, in horizontaler Richtung verschiebbar, d.h. ein leerer Sack 66 kann, bereits durch die Ringklammer 79 durchgeschoben, samt dieser auf den Fortsatz 58 dichtend aufgebracht werden. Ebenfalls kann in einer entgegengesetzten Bewegung ein mit ausgefilterten Flusen 62 gefüllter Sack 66 dementsprechend vom Fortsatz 58 abgezogen werden. Die Deckplatte 54 ist dabei, wie in Zusammenhang mit Fig. 1 beschrieben, abnehmbar. Es ist auch möglich, den Sack 66 nach Abziehen vom Fortsatz 58 samt dem zweiten Filterelement 84 aus der Wanne 53 zu entnehmen.

Die in Fig. 2 dargestellte Filtervorrichtung 50 arbeitet wie folgt:

Zunächst wird ein leerer Sack 66 in die in Fig. 2 dargestellte Position gebracht. Der Einlaßstutzen 56 wird mit einer Ablaßleitung einer Waschmaschine verbunden.

Die durch den Einlaßstutzen 56 in den Innenraum des Sackes 66 einströmende Flotte, wie dies in Fig. 2 durch einen Pfeil 59 dargestellt wird, bläht diesen auf und stromt durch die Öffnungen 67 bzw. Poren des Sackes 66 hindurch, wie dies durch Pfeile 61 angedeutet ist. Dabei werden grobe Flusen 62 aus der Flotte ausgefiltert und vom Sack 66 zurückgehalten.

Kleinere schwere Partikel 82 wie Glassplitter, Sand, Metallteile oder dgl., die durch die Öffnungen 67 hindurchgetreten sind, sinken aufgrund der Schwerkraft auf den Boden 75 ab und sammeln sich vor dem geschlossenen Abschnitt 92 des zweiten Filterelementes 84.

Die Flüssigkeit strömt durch die Öffnungen 40 des als stehendes Stahlblech ausgebildeten zweiten Filterelementes 84 hindurch, wie dies durch die Pfeile 65 angedeutet ist. Dabei werden feine Flusen 63 aus der Flotte ausgefiltert.

In Strömungsrichtung können anschließend noch weitere Filterelemente, beispielsweise in Form von stehenden Stahlblechen oder maschenartigen Feinfiltern vorgesehen sein.

Die vollständig ausgefilterte Flotte strömt durch einen Auslaßstutzen 80, wie dies durch einen Pfeil 81 angedeutet ist, aus dem Behälter 52 aus.

Der Behälter 52 kann, wie zuvor in Zusammenhang mit Fig. 1 beschrieben, mit einer Pumpe zum Abpumpen der Flotte, sowie mit einem Schwimmer bzw. einer Überlaufsicherungsanzeige versehen sein.

**Ansprüche**

1. Filtervorrichtung zum Ausfiltern von Feststoffen aus Flüssigkeiten, insbesondere zum Ausfiltern von Flusen und Feststoffverunreinigungen aus Waschlaugen von Waschmaschinen, mit einem Behälter (12, 52), der mit Einlaß- (14, 56) und Auslaßmittel (18, 48, 80) für die Flüssigkeit versehen ist, wobei zwischen Einlaß- (14, 56) und Auslaßmittel (18, 48, 80) Filterelemente (24, 34, 64, 74) vorgesehen sind, durch die die von den Einlaßmitteln (14, 56) kommende Flüssigkeit vor Austritt aus den Auslaßmitteln (18, 48, 80, 1) strömt, dadurch gekennzeichnet, daß im Behälter (12, 52) ein erstes, als Grobfilter ausgebildetes, aus dem Behälter (12, 52) entnehmbares Filterelement (24, 64) angeordnet ist, und daß in Strömungsrichtung anschließend an das erste Filterelement (24, 64) zumindest ein zweites, als Feinfilter ausgebildetes Filterelement (34, 74) angeordnet ist, das in einem bodenseitigen Abschnitt (42, 92) geschlossen ist.

2. Filtervorrichtung nach Anspruch 1, dadurch gekennzeichnet, daß der Behälter (12, 52) als Wanne (13, 53) mit abnehmbarer Deckplatte (54) ausgebildet ist, wobei die Einlaß- (14, 56) und Auslaßmittel (18, 80) als an der Behälteraußenseite angeordnete Stutzen (16, 20, 56, 80) ausgebildet sind, über die der Behälter (12, 52) in eine Ablaufleitung einer Waschmaschine zwischenschaltbar ist.

3. Filtervorrichtung nach Anspruch 2, dadurch gekennzeichnet, daß der Behälter (12) als fahrbares Sockelteil ausgebildet ist, auf dessen Deckplatte (54) eine Waschmaschine stellbar ist.

4. Filtervorrichtung nach einem der Ansprüche 1 bis 3, dadurch gekennzeichnet, daß der Behälter (12) quaderförmig ausgebildet ist, wobei an dessen einer Stirnseite (17) im Bereich deren Oberkante die Einlaßmittel (14) angeordnet sind, wobei in Durchströmrichtung nach dem letzten Filterelement (34) im Bereich einer Bodenkante des Behälters (12) die Auslaßmittel (18) vorgesehen sind.

5. Filtervorrichtung nach einem der Ansprüche 1 bis 4, dadurch gekennzeichnet, daß das erste Filterelement (24) als perforiertes Brett ausgebildet ist, das in Anströmrichtung gesehen, derart geneigt ist, daß dessen Oberkante (28) weiter stromabwärts liegt als dessen Unterkante (26).

6. Filtervorrichtung nach Anspruch 5, dadurch gekennzeichnet, daß das erste Filterelement (24) mit Öffnungen (30, 31 32, 33) versehen ist, deren Größe, von der Oberkante (28) zur Unterkante (26) hin gesehen, abnimmt.

7. Filtervorrichtung nach einem der Ansprüche 1 bis 4, dadurch gekennzeichnet, daß das erste Filterelement (64) als mit Öffnungen (67) versehener Sack (66) ausgebildet ist.

8. Filtervorrichtung nach Anspruch 7, dadurch gekennzeichnet, daß die Einlaßmittel einen Einlaßstutzen (56) aufweisen, der sich in einem Fortsatz (58) in den Innenraum (60) des Behälters (52) hineinerstreckt, und daß der Sack (66) im Bereich seiner Öffnung über den Fortsatz (58) gestülpt ist.

9. Filtervorrichtung nach Anspruch 7 oder 8, dadurch gekennzeichnet, daß eine Haltevorrichtung (68) den Sack (66) im Behälter hält.

10. Filtervorrichtung nach Anspruch 9, dadurch gekennzeichnet, daß die Haltevorrichtung (68) einerseits auf dem um den Fortsatz (58) liegenden Abschnitt des Sackes (66) fest anbringbar ist, und andererseits vom zweiten Filterelement (74) getragen wird.

11. Filtervorrichtung nach Anspruch 1 oder einem oder mehreren der folgenden, dadurch gekennzeichnet, daß das zweite Filterelement (34, 74) unmittelbar anschließend an das erste Filterelement (24, 64) und senkrecht stehend angeordnet ist.

12. Filtervorrichtung nach Anspruch 8, dadurch gekennzeichnet, daß das zumindest eine weitere bzw. zweite Filterelement (34, 74) oberhalb des geschlossenen bodenseitigen Abschnitts (42, 92) mit Öffnungen (40) versehen ist, deren Größe, vom bodenseitigen Abschnitt (42, 92) zur Oberkante gesehen, zunimmt.

13. Filtervorrichtung nach Anspruch 1 oder einem oder mehreren der folgenden, dadurch gekennzeichnet, daß im Behälter (12) in Durchströmrichtung nach dem letzten Filterelement (34) eine Pumpe (51) angeordnet ist, die die gefilterte Flüssigkeit zu den Auslaßmitteln (48) fördert.

14. Filtervorrichtung nach Anspruch 1 oder einem oder mehreren der folgenden, dadurch gekennzeichnet, daß im Behälter (12) ein Schwimmer (44) angeordnet ist, der mit einer Überlaufsicherungsanzeige gekoppelt ist, wobei der Schwimmer (44) bei Überschreiben eines bestimmten Flüssigkeitsstandes im Behälter (12) die Anzeige auslöst.

15. Filtervorrichtung nach Anspruch 14, dadurch gekennzeichnet, daß der Schwimmer (44) im Bereich zwischen geneigtem erstem Filterelement (24) und dem nachfolgenden Filterelement (34) angeordnet ist.

16. Filtervorrichtung nach Anspruch 14 oder 15, dadurch gekennzeichnet, daß die Überlaufsicherungsanzeige an einer mit der Filtervorrichtung (10, 50) in flüssigkeitsleitender Verbindung stehenden Waschmaschine anbringbar ist.

Fig 1

Fig 2